(19) **Europäisches Patentamt / European Patent Office / Office européen des brevets**

(11) **EP 2 187 546 A1**

(12) **EUROPEAN PATENT APPLICATION**
published in accordance with Art. 153(4) EPC

(43) Date of publication:
**19.05.2010 Bulletin 2010/20**

(51) Int Cl.:
**H04J 11/00** (2006.01) **H04L 1/16** (2006.01)

(21) Application number: **07806499.5**

(22) Date of filing: **31.08.2007**

(86) International application number:
**PCT/JP2007/067026**

(87) International publication number:
**WO 2009/028095 (05.03.2009 Gazette 2009/10)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Fujitsu Limited**
**Kawasaki-shi, Kanagawa 211-8588 (JP)**

(72) Inventors:
- **KIMURA, Dai**
  **Kawasaki-shi**
  **Kanagawa 211-8588 (JP)**
- **YANO, Tetsuya**
  **Kawasaki-shi**
  **Kanagawa 211-8588 (JP)**

- **SHIMOMURA, Tsuyoshi**
  **Kawasaki-shi**
  **Kanagawa 211-8588 (JP)**
- **OBUCHI, Kazuhisa**
  **Kawasaki-shi**
  **Kanagawa 211-8588 (JP)**
- **ITO, Akira**
  **Kawasaki-shi**
  **Kanagawa 211-8588 (JP)**
- **TANAKA, Yoshinori**
  **Kawasaki-shi**
  **Kanagawa 211-8588 (JP)**

(74) Representative: **Stebbing, Timothy Charles**
**Haseltine Lake LLP**
**Lincoln House, 5th Floor**
**300 High Holborn**
**London WC1V 7JH (GB)**

(54) **CONTROL INFORMATION COMMUNICATION METHOD AND ITS DEVICE**

(57) The present invention is a control data communication method for multiplexing and transmitting plural mutually independent types of control data by using a control channel and for separating each of the control data received from the control channel, in that changes and transmits patterns of reference signals included in the control channel according to a format for multiplexing control data, detects a format for multiplexing the transmitted control data according to the pattern of the reference signals included in the control channel, and separates each control data in correspondence with the detected format.

FIG.8

**Description**

TECHNICAL FIELD

The embodiments discussed herein are related to a control data communication method and an apparatus for the control data communication method, such as, a control data communication method that multiplexes various independent control data, transmits the data by using a control channel, and separates the control data received from the control channel, and an apparatus for the control data communication method.

BACKGROUND ART

According to a standardization organization 3GPP (3rd Generation Partnership Project), standardization referred to as LTE (Long Term Evolution) is being promoted as a specification of high speed data communication in a mobile communication system. In LTE, there are two kinds of downlink control channels, UL grant and DL Scheduling Information.

The UL grant is used for permitting transmission of uplink data and designating parameters of the uplink data. When a mobile station (UE: User Equipment) receives the UL grant, the UE performs transmission of uplink data. Further, the DL Scheduling information is used for designating parameters of downlink data to be transmitted immediately after. A mobile station performs reception of downlink data when receiving the DL Scheduling information and transmits Ack or Nack (Ack/Nack) by using an uplink control channel according to check results of CRC (Cyclic Redundancy Check).

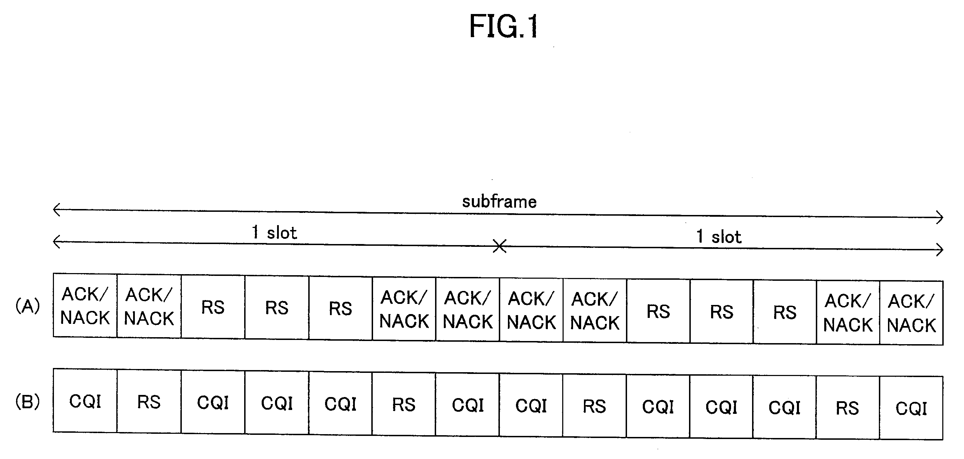

(A) of FIG. 1 illustrates an example of an uplink control channel format that transmits Ack/Nack. In this example, 1 sub-frame is, for example, 1.0 ms and formed of two slots. Each slot is formed of 7 blocks. RS (reference signal) is a known pilot signal.

Further, in LTE, the uplink control channel is also used for transmitting, for example, CQIs (Channel Quality Indicator). The CQI is an index representing transmission path status of a downlink and is normally transmitted from a base station at a predetermined frequency. FIG. 1B illustrates an example of an uplink control channel format that transmits CQIs.

In a case where Ack/Nack and CQI are transmitted simultaneously, the Ack/Nack and the CQI are multiplexed and transmitted in the same channel for maintaining single carrier FDMA (SC-FDMA: Single Carrier Frequency Division Multiple Access), which is a characteristic of LTE uplink (see, for example, non-patent documents 1, 2, and 3).

FIG. 2 illustrates an example of an uplink control channel format according to a related art example. In this example, the Ack/Nack and the CQI are simply time-divisionally multiplexed.

FIG. 3 illustrates another example of an uplink control channel format according to a related art example. In (A) of FIG. 3, Ack is multiplexed for each slot by modulating a reference signal with {1, 1}. In (B) of FIG. 3, Nack is multiplexed for each slot by modulating a reference signal with {1, -1}.

FIG. 4 illustrates another example of an uplink control channel format according to a related art example. In FIG. 4, Ack/Nack and CQI are encoded together and contained in five blocks of each slot.

Non-Patent Document 1: "3GPP TSG RAN1 #49-bis R1-072706", Orlando, U.S.A, June 25-29, 2007
Non-Patent Document 2: "3GPP TSG RAN WG1 #49bis R1-072755", Orlando, U.S.A, June 25-29, 2007
Non-Patent Document 3: "3GPP TSG RAN WG1 Meeting #49bis R1-073003", Orlando, U.S.A, June 25-29, 2007

DISCLOSURE OF INVENTION

PROBLEM TO BE SOLVED BY INVENTION

Ack/Nack signals are received and determined by a base station (also referred to as "end": evolved Node B). However, in a case where DL Scheduling information could not be received in the downlink, a mobile station does not transmit Ack/Nack (DTX transmission). Therefore, it is necessary for the base station to determine the three values of Ack/Nack/DTX.

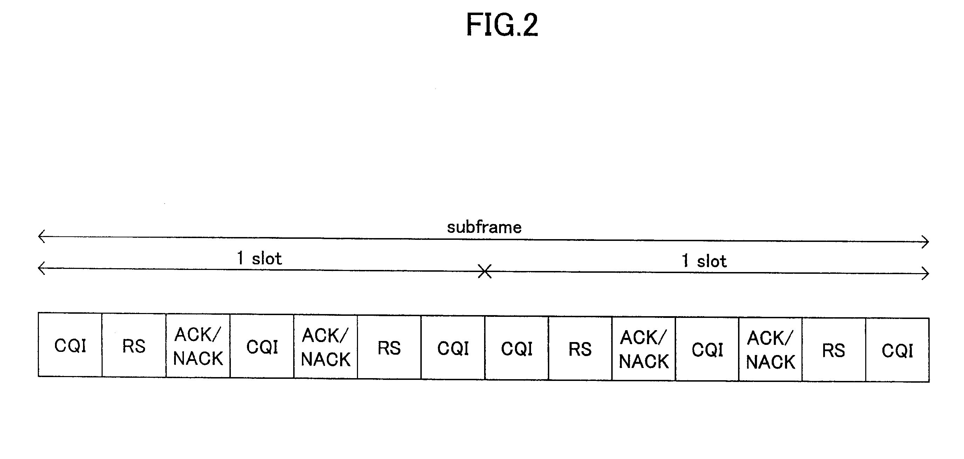

The multiplexing methods of the related art examples illustrated in FIGS. 2-4 are not formats allowing easy determination of the three values Ack/Nack/DTX. In a case where the base station erroneously determines DTX as Ack, retransmission in Layer 1 cannot be performed and loss of packets occurs. As a result, throughput is significantly degraded.

In view of the above, it is a general object of an embodiment of the present invention to provide a control data communication method and an apparatus for the control data communication method that can easily determine the three values of Ack/Nack/DTX.

MEANS FOR SOLVING PROBLEM

In order to achieve the object, there is provided a control data communication method for multiplexing and transmitting plural mutually independent types of control data by using a control channel and for separating the control data received from the control channel, the control data communication method including: changing and transmitting patterns of reference signals included in the control channel according to a format for multiplexing the control data; detecting the format for multiplexing the transmitted control data according to the pattern of the reference signals included in the control channel; and separating the control data in correspondence with the detected format.

EFFECT OF INVENTION

With the control data communication method, determination of the three values Ack/Nack/DTX can easily be performed, and significant degrading of throughput due to erroneously determining DTX as Ack/Nack can be prevented.

BRIEF DESCRIPTION OF DRAWINGS

FIG. 1 is a schematic diagram illustrating an example of an uplink control channel format that transmits Ack/Nack, and CQI according to a related art example;
FIG. 2 is a schematic diagram illustrating an example of an uplink control channel format according to a related art example;

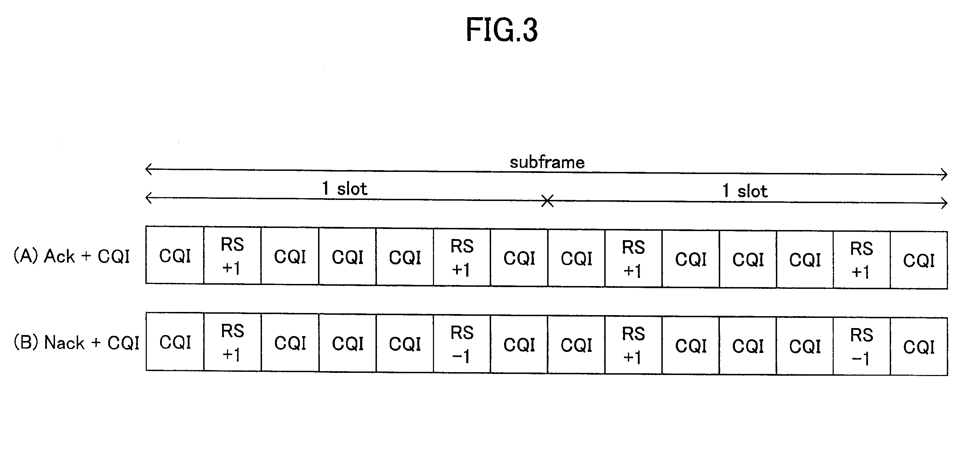

FIG. 3 is a schematic diagram illustrating another example of an uplink control channel format according to a related art example;

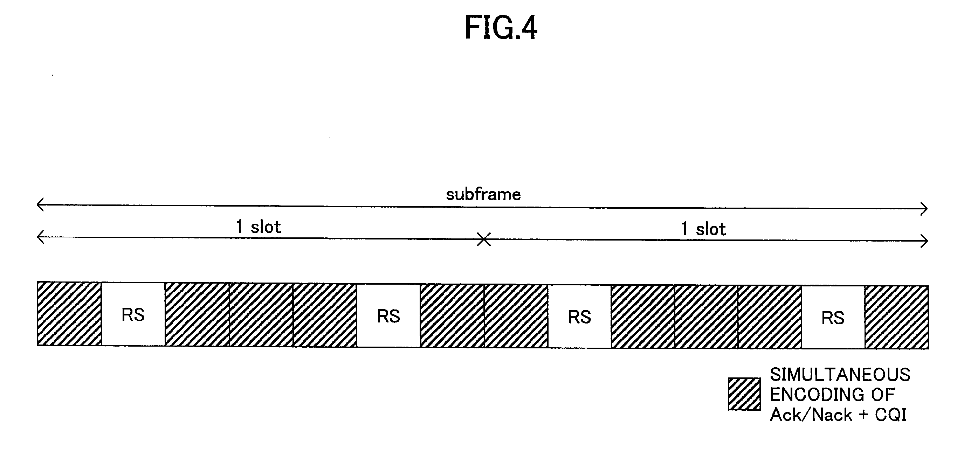

FIG. 4 is a schematic diagram illustrating yet another example of an uplink control channel format according to a related art example;

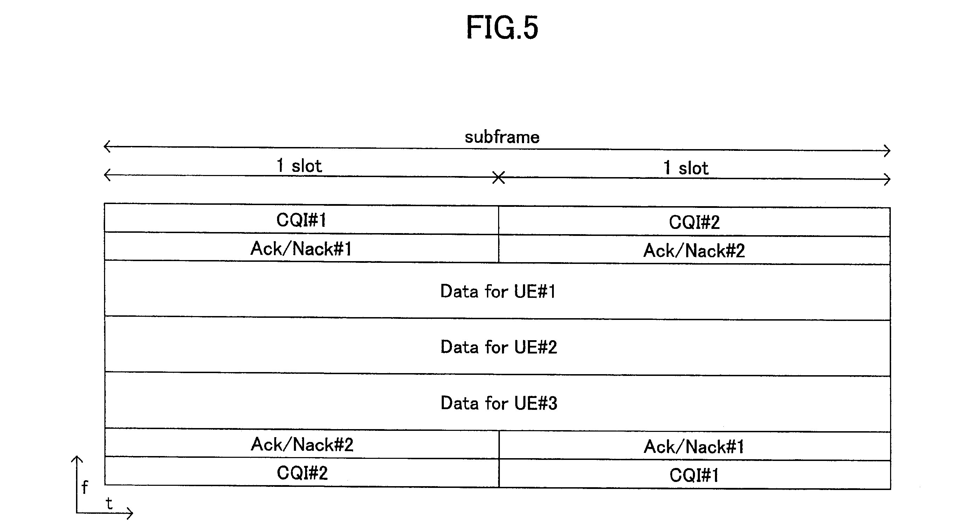

FIG. 5 is a schematic diagram illustrating a configuration of an LTE uplink channel;

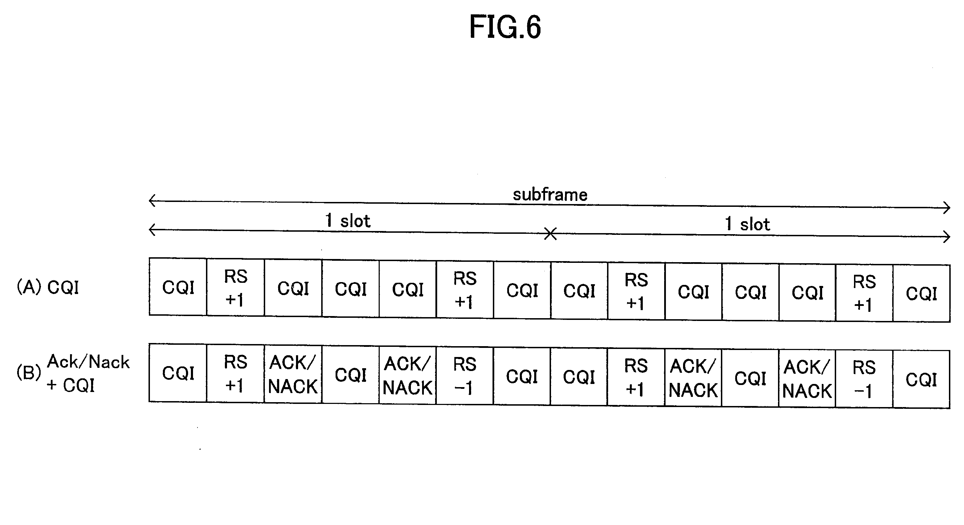

FIG. 6 is a schematic diagram illustrating an uplink control channel format according to a first embodiment of the present invention;

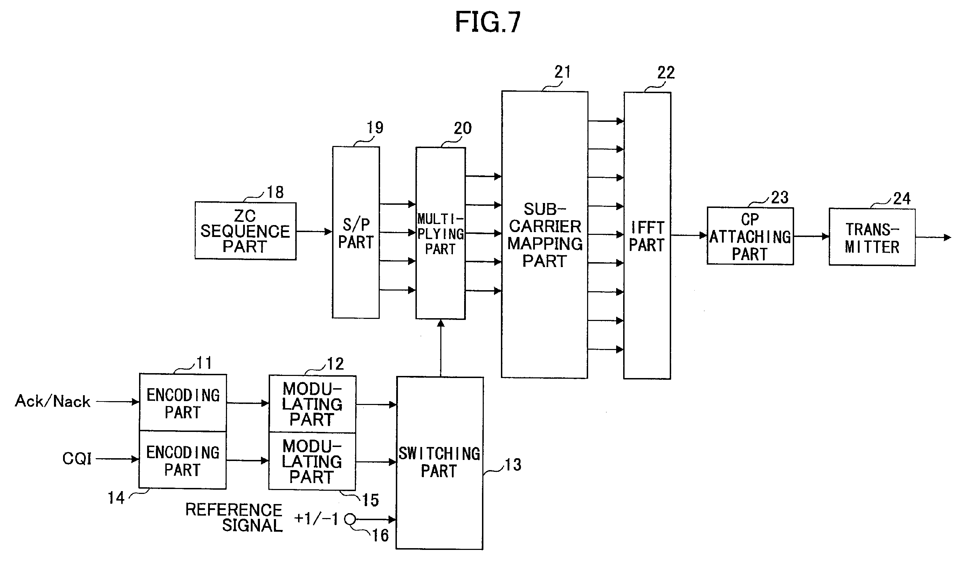

FIG. 7 is a block diagram of an uplink control channel transmitting part of a mobile station according to a first embodiment of the present invention;

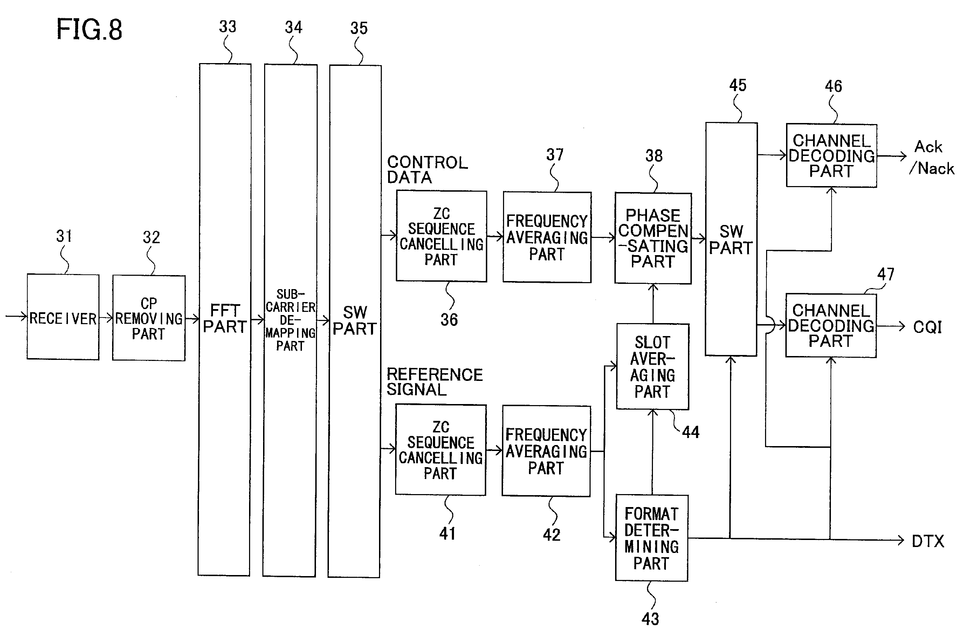

FIG. 8 is a block diagram of an uplink control channel receiving part of a base station according to a first embodiment of the present invention;

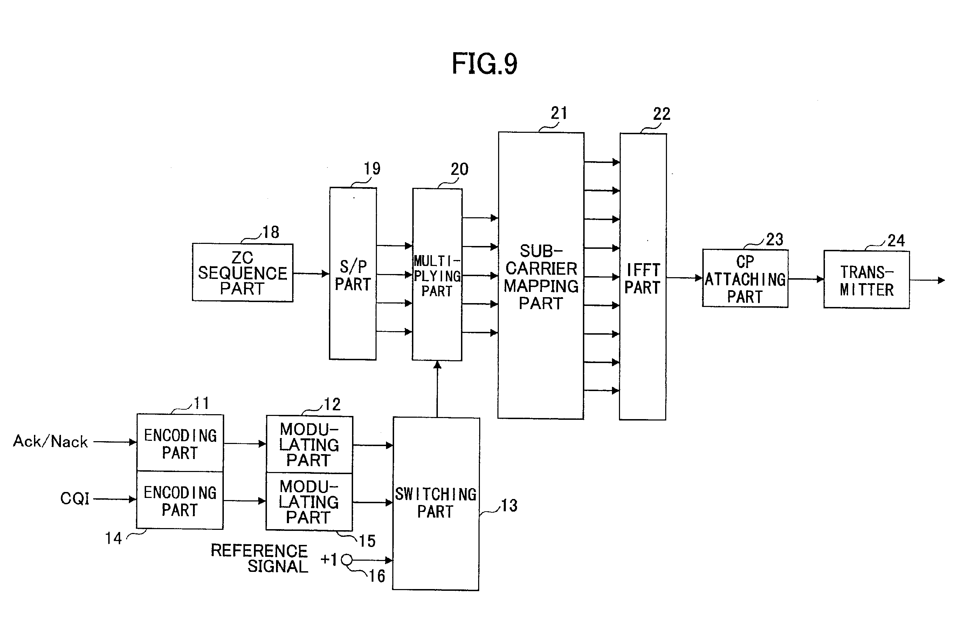

FIG. 9 is a block diagram of an uplink control channel transmitting part of a mobile station according to a related art example;

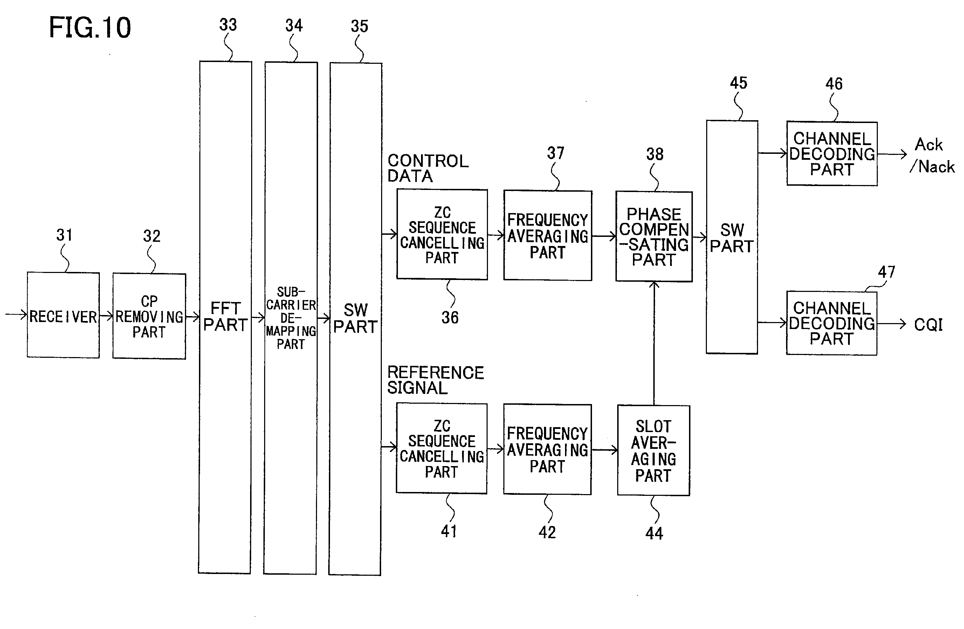

FIG. 10 is a block diagram of an uplink control channel receiving part of a base station according to a related art example;

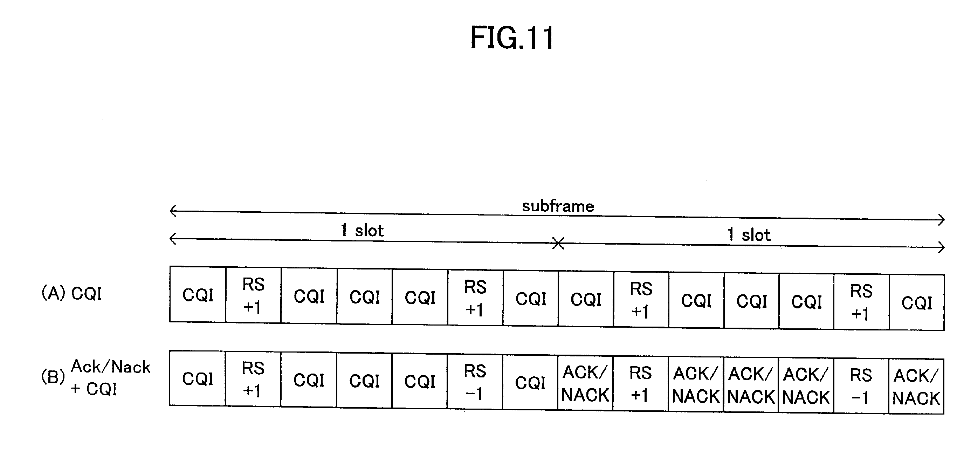

FIG. 11 is a schematic diagram illustrating a modified example of the uplink control channel format according to the first embodiment of the present invention;

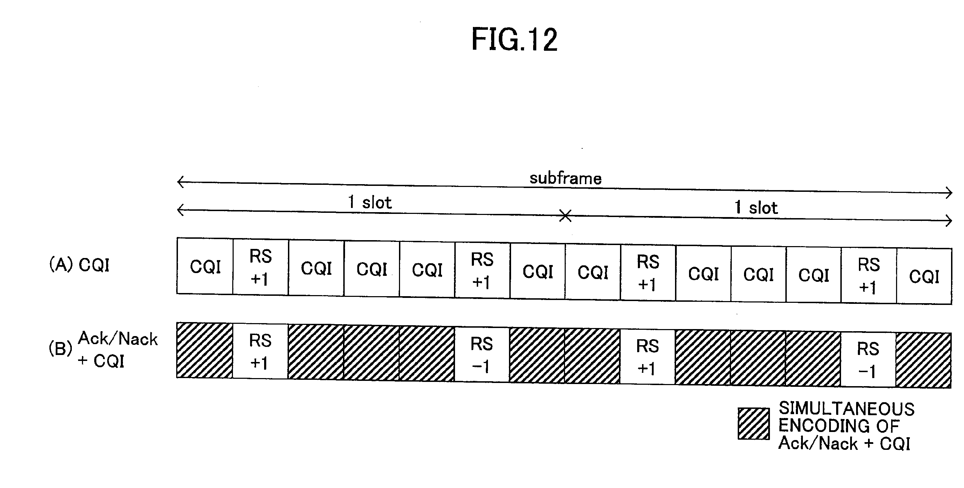

FIG. 12 is a schematic diagram illustrating an uplink control channel format according to a second embodiment of the present invention;

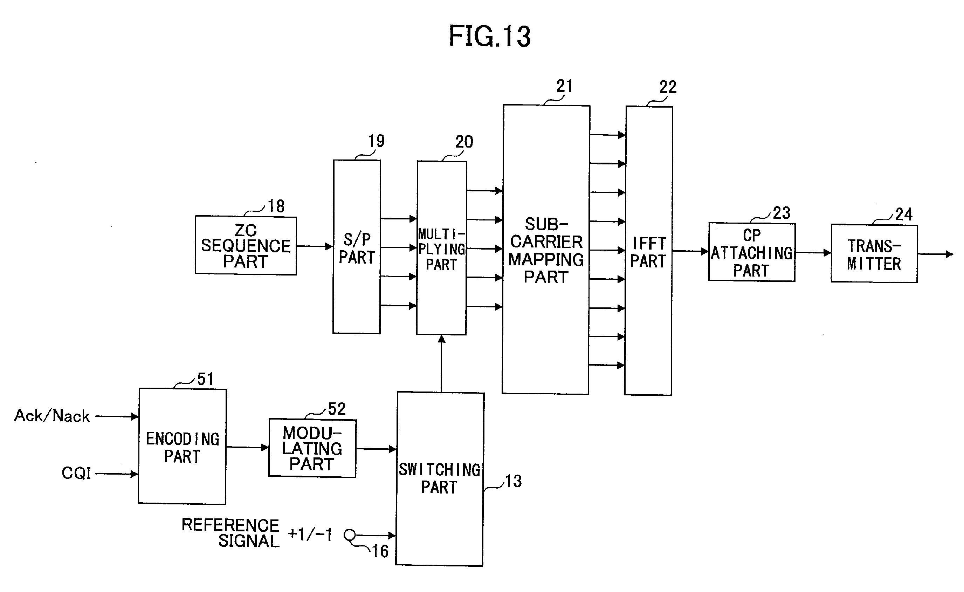

FIG. 13 is a block diagram of an uplink control channel transmitting part of a mobile station according to the second embodiment of the present invention;

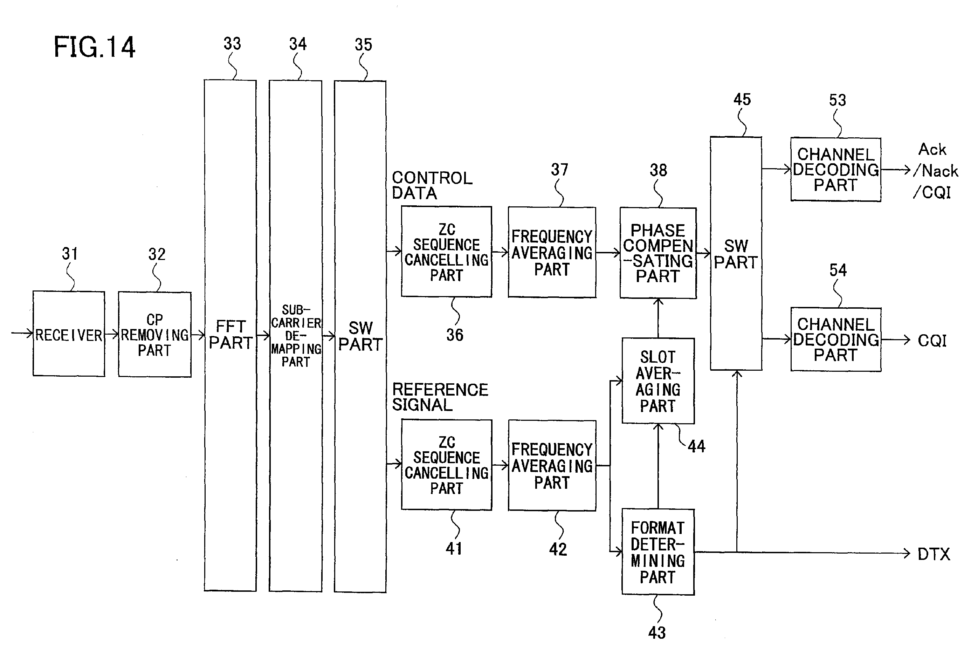

FIG. 14 is a block diagram of an uplink control channel receiving part of a base station according to the second embodiment of the present invention;

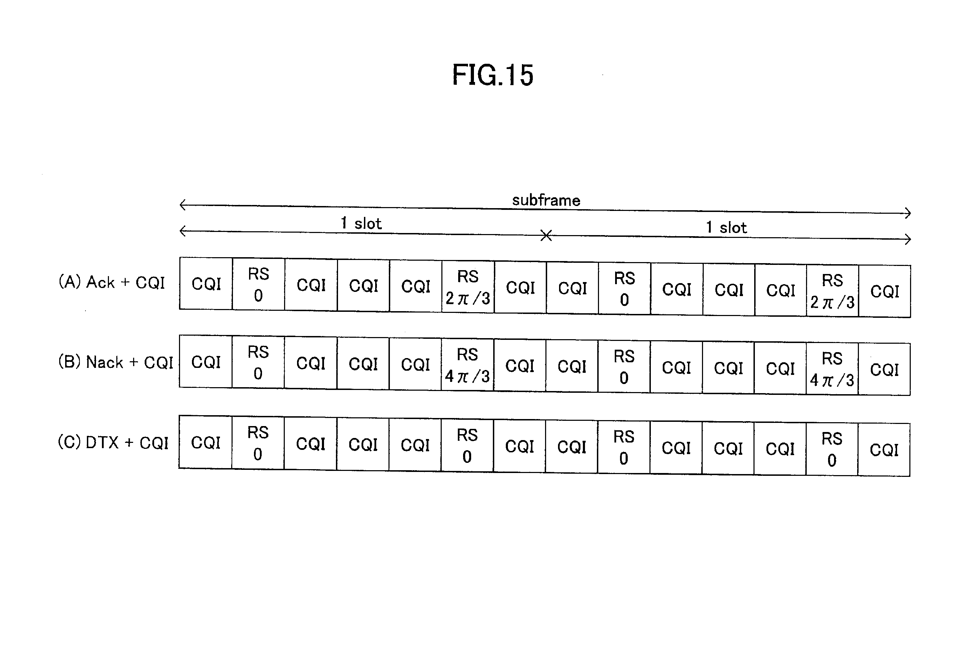

FIG. 15 is a schematic diagram of an uplink control channel format according to a third embodiment of the present invention;

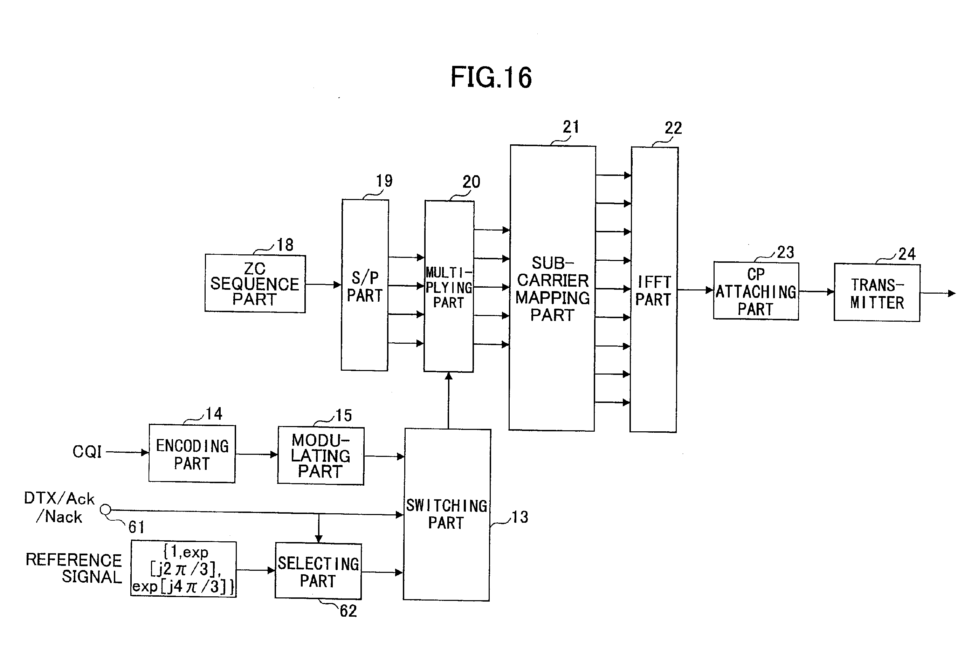

FIG. 16 is a block diagram of an uplink control channel transmitting part of a mobile station according to the third embodiment of the present invention;

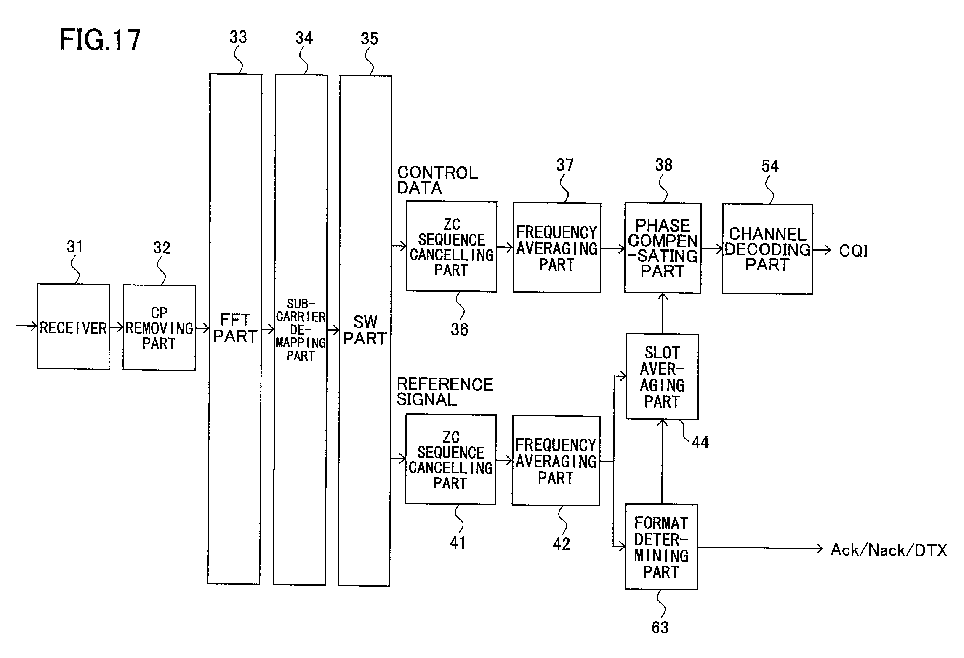

FIG. 17 is a block diagram of an uplink control channel receiving part of a base station according to the third embodiment of the present invention;

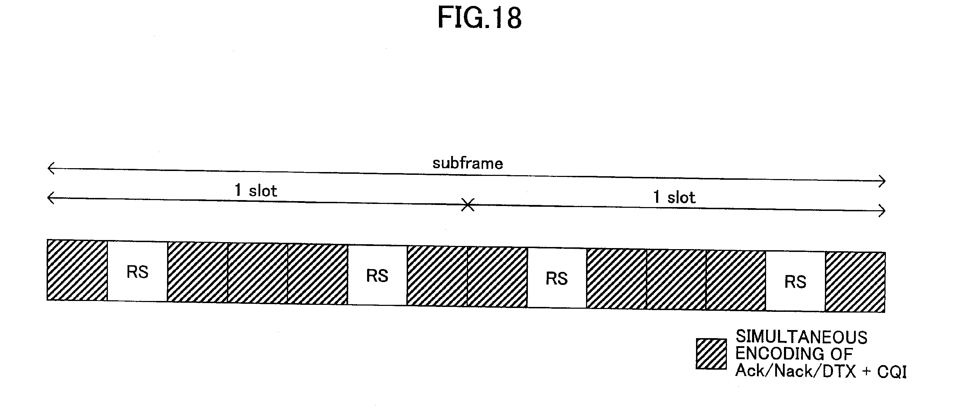

FIG. 18 is a schematic diagram illustrating an uplink control channel format according to a fourth embodiment of the present invention;

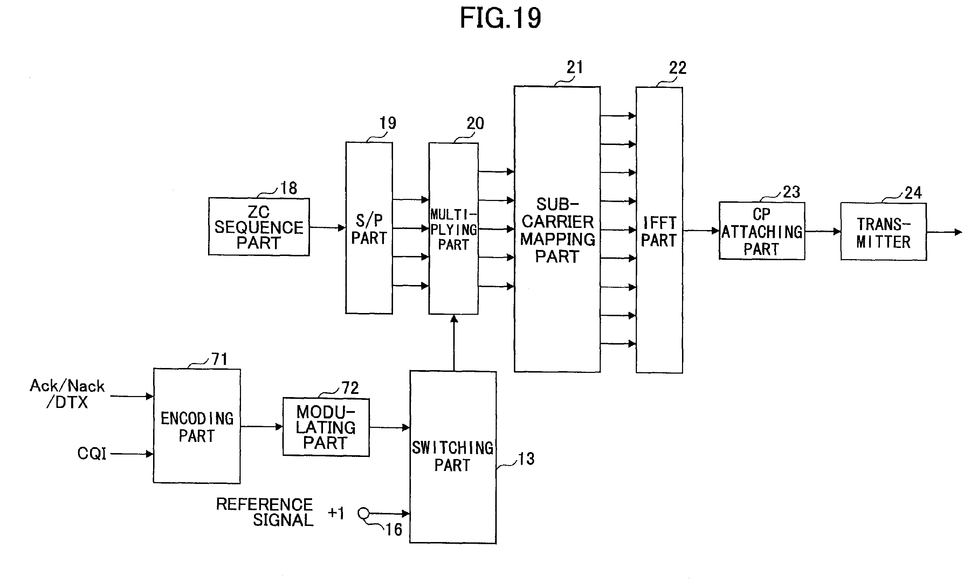

FIG. 19 is a block diagram of an uplink control channel transmitting part of a mobile station according to the fourth embodiment of the present invention; and

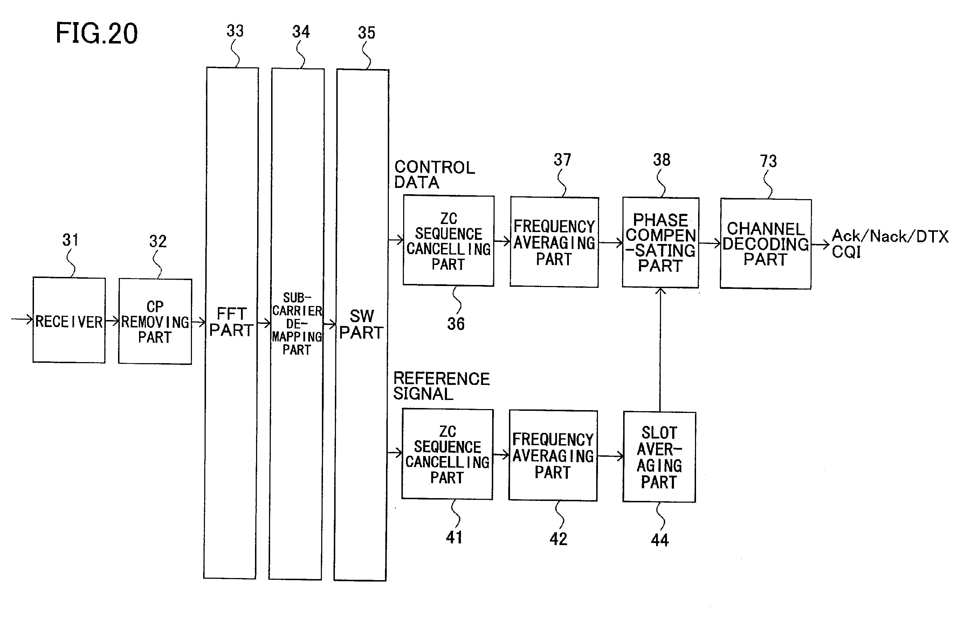

FIG. 20 is a block diagram of an uplink control channel receiving part of a base station according to the fourth embodiment of the present invention.

EXPLANATION OF REFERENCE NUMERALS

| 11, 14, 51, 71 | encoding part |
|---|---|
| 12, 15, 52, 72 | modulating part |
| 13 | switching part |
| 18 | S/P part |
| 20 | multiplying part |
| 21 | sub-carrier mapping part |
| 22 | IFFT part |
| 23 | CP adding part |
| 24 | transmitter |
| 31 | receiver |
| 32 | CP removing part |
| 33 | FFT part |
| 34 | sub-carrier mapping part |
| 35, 45 | SW part |
| 36, 41 | ZC sequence cancelling part |
| 37, 42 | frequency averaging part |
| 38 | phase compensating part |
| 43 | format determining part |
| 44 | slot averaging part |
| 46, 47, 53, 54, 73 | channel decoding part |
| 62 | selecting part |

BEST MODE FOR CARRYING OUT INVENTION

Next, embodiments of the present invention are described with reference to the drawings.

Single carrier FDMA (SC-FDMA) is used in an LTE uplink. With the SC-FDMA, transmission frequency bandwidth may change for each sub-frame; it is, however, limited to using a single frequency bandwidth for performing a single transmission. Therefore, for example, data signals and control data cannot be simultaneously transmitted with different frequency bandwidths. Accordingly, with the LTE, in a case where data signals are to be transmitted simultaneously with the transmission of control data, the control data are multiplexed in the same bandwidth as the data signals. On the other hand, in a case of not simultaneously transmitting the control data and data signals, the control data are transmitted with a bandwidth different from the bandwidth normally used for transmitting data signals (as described below).

FIG. 5 illustrates a configuration of a channel for LTE uplink. In the drawing, the horizontal axis represents a time axis and the vertical axis represents a frequency axis. The control channel in an LTE uplink is assigned to, for example, both sides of a system bandwidth. In the same manner as the data channel, control data are transmitted in the control channel in units of subframes (1.0 ms). However, in order to obtain frequency diversity gain, frequency hopping is performed for each slot (0.5 ms).

As illustrated in FIG. 5, different bandwidths are assigned to the Ack/Nack and CQI. The user equipment measures reception quality of a downlink, quantizes the quality as CQI, and periodically transmits the CQI at predetermined fixed periods.

In a case where the user equipment receives a downlink signal, the user equipment transmits Ack/Nack according to the result of a CRC check after decoding the downlink signal. However, the timing for transmitting the Ack/Nack is not predetermined. Accordingly, in some case, it may be necessary to transmit Ack/Nack at the same time of transmitting CQI. In this case, CQI and Ack/Nack are multiplexed and transmitted with the bandwidth used for transmitting CQI.

[First Embodiment]

FIG. 6 illustrates an uplink control channel format according to a first embodiment of the present invention. In (A) and (B) of FIG. 6, one sub-frame consists of, for example, two slots of 1.0 ms, in which each slot consists of seven blocks. (A) of FIG. 6 illustrates a case where there is only CQI (i.e. a case where DTX is multiplexed with CQI). In this case, the reference signals in two of the blocks of the same slot are modulated with the same phase (i.e. modulated with {1, 1}).

(B) of FIG. 6 illustrates a case where Ack/Nack and CQI are time-division multiplexed. In this case, the reference signals in two of the blocks of the same slot are modulated with a reversed phase (i.e. modulated with {1, -1}). It is to be noted that CQI and Ack/Nack are allocated to the slots on the left and right.

Accordingly, a base station can first determine which format is used for transmission by determining the phase of the received reference signals in the same slot. Based on the result of the determination, Ack/Nack and DTX can be demodulated. As a result, significant degrading of throughput due to erroneously determining DTX as Ack/Nack can be prevented.

FIG. 7 illustrates a block diagram of an uplink control channel transmission part of a user equipment according to a first embodiment of the present invention. In FIG. 7, for example, Ack/Nack of 1 or 2 bits is repetitively encoded in an encoding part 11, modulated in a modulating part 12, and supplied to a switching part 13. Meanwhile, for example, CQI of 4 or 5 bits is convolutionally encoded in an encoding part 14, modulated in a modulating part 15, and supplied to the switching part 13.

The switching part 13 sequentially selects and switches the CQI, +1, CQI, CQI, +1, and CQI illustrated in (A) of FIG. 6 in block units. Further, the CQI, +1, Ack/Nack, CQI, Ack/Nack, -1, CQI illustrated in (B) of FIG. 6 are sequentially selected and switched and supplied to a multiplying part 20 in block units.

A ZC sequence part 18 generates, for example, a ZC sequence of 12 symbols. The ZC sequence is converted into parallel form by a S/P (serial/parallel converting) part 19 and supplied to the multiplying part 20. The multiplying part 20 multiplies the ZC sequence with the signals supplied from the switching part 13 and supplies it to a sub-carrier mapping part 21 in parallel.

The sub-carrier mapping part 21 maps the signals from the multiplying part 20 to a frequency bandwidth of a sub-carrier of the control channel illustrated in FIG. 5. Then, because the signals have been processed as signals of a frequency domain until this stage, the signals are converted into signals of time domain by performing inverse Fourier transformation in an IFFT (Inverse Fast Fourier Transform) part 22, are added with CP (Cyclic Prefix) in a CP adding part 23, and are transmitted from a transmitting part 24.

FIG. 8 illustrates a block diagram of an uplink control channel receiving part of a base station according to a first embodiment of the present invention. In FIG. 8, signals received at a receiver 31 are supplied to a CP removing part 32 by which a CP (Cyclic Prefix) is removed therefrom. Then, the signals are converted into frequency domain signals in block units by a FFT (Fast Fourier Transform) part 33.

Then, the sub-carrier de-mapping part 34 performs a sub-carrier de-mapping process and separates control data (Ack/Nack, CQI) and reference signals according to the formats illustrated in (A) and (B) of FIG. 6.

A ZC sequence cancelling part 36 removes the ZC sequence from the control data by multiplying the control data with a complex conjugate sequence. Then, a frequency averaging part 37 obtains the average on the frequency axis from the control data and supplies the average to a phase compensating part 38.

A ZC cancelling part 41 removes the ZC sequence from the reference signals by multiplying the reference signals with a complex conjugate sequence. Then, a frequency averaging part 42 obtains the average on the frequency axis and supplies the average to a format determining part 43 and a slot averaging part 44.

The format determining part 43 obtains correlation values of the averaged reference signal for a pattern {+1, +1} and for a pattern {+1, -1} and determines that the one having greater correlation value is the pattern of the actually transmitted reference signal, that is, the transmitted format. In other words, the format determining part 43 determines whether the transmitted format is a format including only CQI (multiplexed with DTX) as illustrated in (A) of FIG. 6 or a format including Ack/Nack multiplexed with CQI as illustrated in (B) of FIG. 6 depending on whether the reference signals in the slot have the same phase or the opposite phase. The format determining part 43 supplies the determination result to a slot averaging part 44, a SW part 45, and the channel decoding parts 46, 47. Further, in a case where the format includes only CQI, DTX is output.

Based on the result of the format determination, the slot averaging part 44 averages the reference signals in a slot either in a case where the reference signals in a slot have the same phase (a case where the pattern is {+1, +1}) or the opposite phase (a case where the pattern is {+1, - 1}). The phase compensating part 38 performs phase compensation of the control data according to phase data of the reference signals.

Then, the SW part 45 separates the control data into Ack/Nack and CQI in accordance with the format. The channel decoding part 46 decodes the channel of the Ack/Nack and outputs the Ack/Nack. The channel decoding part 47 decodes the channel of the CQI and outputs the CQI.

In a case where the number of mapped symbols of the CQI decreases, there is a risk of degrading of reception quality of CQI. Therefore, in a case of transmitting Ack/Nack and CQI, the accuracy of CQI may be reduced.

For example, in a case of transmitting only CQI (format illustrated in (A) of FIG. 6) where there are 32 patterns of CQI, the encoding rate is 0.25 when encoding 5 bits representing the 32 patterns with 20 bits per sub-frame (5 blocks) (in a case of QPSK).

In a case of transmitting Ack/Nack + CQI (format illustrated in (B) of FIG. 6) where there are 32 patterns of CQI, the number of bits assigned for transmission of CQI is 12 bits per sub-frame (3 blocks). Therefore, the encoding rate is 0.42. In this case, by reducing the accuracy of CQI to 4 bits (16 patterns), the encoding rate can be 0.33. Thus, throughput can be prevented from degrading.

For comparison, Fig. 9 illustrates a block configuration of an uplink control channel transmitting part in a case where a format according to a related art example of FIG. 2 is used, and FIG. 10 illustrates a block configuration of an uplink control channel receiving part in a case where a format according to a related art example of FIG. 2 is used. In FIG. 9 and FIG. 10, like components are denoted with like reference numerals as those of FIG. 7 and FIG. 8. In FIG. 9, only +1 is supplied from a terminal 16 to the switching part 13. That is, reference signals are supplied where Ack/Nack is multiplexed or where DTX is multiplexed. The switching part 13 of FIG. 7 supplies different reference signals according to a case where Ack/Nack is multiplexed and where DTX is multiplexed. In FIG. 10, there is no format determining part 43.

<ZC sequence>

In single carrier transmission, in a case where frequency is equalized at the receiving side, reference signals are preferred to have constant amplitude in the frequency region (i.e. the autocorrelation of a given periodic time shift is 0) in order to improve the accuracy of frequency estimation in the frequency region. On the other hand, from the standpoint of PAPR (Peak-to-Average Power Ratio), it is preferable that the reference signals have constant amplitude in a time region.

As an exemplary sequence for realizing these characteristics, a ZC (Zadoff-Chu) sequence is proposed. The Formula thereof is illustrated below. Here, "k" represents a symbol number and "n" represents an index in a time direction. If the integers of "k" and "L" are both primary, the sequence length is "L".

$$[\text{Formula } 1]$$

$$c_k(n) = \exp\left[\frac{j\pi k}{L} n(n+1)\right] \qquad (L = odd)$$

$$c_k(n) = \exp\left[\frac{j\pi k}{L} n^2\right] \qquad (L = even)$$

<Modified Example of First Embodiment>

FIG. 11 illustrates a modified example of an uplink control channel format according to the first embodiment of the present invention. (A) of FIG. 11 illustrates a case where there is only CQI (i.e. a case where DTX is multiplexed with CQI). In this case, the reference signals in two of the blocks of the same slot are modulated with the same phase (i.e. modulated with {1, 1}). This is the same as (A) of FIG. 6.

(B) of FIG. 11 illustrates a case where Ack/Nack and CQI are time-division multiplexed. In this case, the reference signals in two of the blocks of the same slot are modulated with a reversed phase (i.e. modulated with {1, -1}). CQI is allocated to the slot of the left side and Ack/Nack is allocated to the slot of the right side.

This is merely one example illustrating symbol positions of Ack/Nack. In this embodiment of the present invention, the positions of Ack/Nack and other symbols are not limited to the example.

<Second Embodiment>

FIG. 12 illustrates an uplink control channel format according to a second embodiment of the present invention. (A) of FIG. 12 illustrates a case where there is only CQI (i.e. a case where DTX is multiplexed with CQI). In this case, the reference signals in two of the blocks of the same slot are modulated with the same phase (i.e. modulated with {1, 1}). This is the same as (A) of FIG. 6.

(B) of FIG. 12 illustrates a case where Ack and CQI or Nack and CQI are combined and encoded (simultaneous encoding of Ack/Nack and CQI). In this case, the reference signals in two blocks of the same slot are modulated with a reversed phase (i.e. modulated with {1, -1}).

Therefore, a base station can first determine which format is used for transmission by determining the phase of received reference signals in the same slot. Based on the result of the determination, Ack/Nack and DTX can be demodulated. As a result, significant degrading of throughput due to erroneously determining DTX as Ack/Nack can be prevented.

FIG. 13 illustrates a block diagram of an uplink control channel transmitting part of a user equipment according to a second embodiment of the present invention. In FIG. 13, for example, Ack/Nack of 1 or 2 bits and CQI of 5 bits which total 6 or 7 bits (Ack/Nack + CQI) are encoded by an encoding part 51, modulated by a modulating part 52, and supplied to the switching part 13.

The switching part 13 sequentially selects and switches the CQI, +1, CQI, CQI, CQI, +1, and CQI illustrated in (A) of FIG. 12 in block units. Further, the Ack/Nack + CQI, +1, Ack/Nack + CQI, Ack/Nack + CQI, Ack/Nack + CQI, -1, and Ack/Nack + CQI illustrated in (B) of FIG. 12 are sequentially selected and switched and supplied to the multiplying part 20 in block units.

The ZC sequence part 18 generates, for example, a ZC sequence of 12 symbols. The ZC sequence is converted into parallel form by the S/P part 19 and supplied to the multiplying part 20. The multiplying part 20 multiplies the ZC sequence with the signals supplied from the switching part 13 and supplies it to the sub-carrier mapping part 21 in parallel.

The sub-carrier mapping part 21 maps the signals from the multiplying part 20 to a frequency bandwidth of a sub-carrier of the control channel illustrated in FIG. 5. Then, because the signals have been processed as signals of a frequency domain until this stage, the signals are converted into signals of time domain by performing inverse Fourier transformation in an IFFT (Inverse Fast Fourier Transform) part 22, are added with CP (Cyclic Prefix) in the CP adding part 23, and are transmitted from the transmitter 24.

FIG. 14 illustrates a block diagram of an uplink control channel receiving part of a base station according to the second embodiment of the present invention. In FIG. 14, signals received at the receiver 31 are supplied to the CP removing part 32 by which a CP is removed therefrom. Then, the signals are converted into frequency domain signals in block units by the FFT (Fast Fourier Transform) part 33.

Then, the sub-carrier de-mapping part 34 performs a sub-carrier de-mapping process and separates control data (Ack/Nack + CQI, CQI) and reference signals according to the formats illustrated in (A) and (B) of FIG. 12.

The ZC sequence cancelling part 36 removes the ZC sequence from the control data by multiplying the control data with a complex conjugate sequence. Then, the frequency averaging part 37 obtains the average on the frequency axis from the control data and supplies the average to the phase compensating part 38.

The ZC cancelling part 41 removes the ZC sequence from the reference signals by multiplying the reference signals with a complex conjugate sequence. Then, the frequency averaging part 42 obtains the average on the frequency axis and supplies the average to the format determining part 43 and the slot averaging part 44.

The format determining part 43 obtains correlation values of the averaged reference signal for a pattern {+1, +1} and for a pattern {+1, -1} and determines that the one having a greater correlation value is the pattern of the actually transmitted reference signal, that is, the transmitted format. In other words, the format determining part 43 determines whether the transmitted format is a format including only CQI (multiplexed with DTX) as illustrated in (A) of FIG. 12 or a format including Ack/Nack multiplexed with CQI as illustrated in (B) of FIG. 12 depending on whether the reference signals in a slot have the same phase or the opposite phase. The format determining part 43 supplies the determination result to the slot averaging part 44 and the SW part 45. Further, in a case where the format includes only CQI, DTX is output.

Based on the result of the format determination, the slot averaging part 44 averages the reference signals in a slot either in a case where the reference signals in a slot have the same phase (a case where the pattern is {+1, +1}) or the opposite phase (a case where the pattern is {+1, - 1}). The phase compensating part 38 performs phase compensation of the control data according to phase data of the reference signals.

Then, the SW part 45 separates the control data into Ack/Nack + CQI and CQI in accordance with the format. The channel decoding part 46 decodes the channel of the Ack/Nack and outputs the Ack/Nack. The channel decoding part 47 decodes the channel of the CQI and outputs the CQI.

<Third Embodiment>

FIG. 15 illustrates an uplink control channel format according to a third embodiment of the present invention. (A) of FIG. 15 illustrates a format of Ack + CQI. In this case, the phase of the reference signal in the second block of the same slot is a criterion (phase 0), and the reference signal of the sixth block is modulated with a phase of $2\pi/3$ (i.e. modulated with {1, exp[2π/3]}).

(B) of FIG. 15 illustrates a format of Nack + CQI. In this case, the phase of the reference signal in the second block of the same slot is a criterion (phase 0), and the reference signal of the sixth block is modulated with a phase of $4\pi/3$ (i.e. modulated with {1, exp[4π/3]}).

(C) of FIG. 15 illustrates of a format of DTX + CQI. In this case, the phase of the reference signals in the second and sixth blocks of the same slot is a criterion (phase 0), and the reference signals are modulated (i.e. modulated with {1, 1}).

Accordingly, a base station can first determine which format is used for transmission by determining the phase of the received reference signals in the same slot. Based on the result of the determination, Ack/Nack and DTX can be demodulated. As a result, significant degrading of throughput due to erroneously determining DTX as Ack/Nack can be prevented.

FIG. 16 illustrates a block diagram of an uplink control channel transmission part of a user equipment according to the third embodiment of the present invention. In FIG. 16, for example, CQI of 5 bits is repetitively encoded in the encoding part 14, modulated in the modulating part 15, and supplied to the switching part 13.

Three types of reference signals 1, exp[2 π/3], exp[4π/3], which are to be supplied to the switching part 13, are supplied to a selecting part 62. DTX/Ack/Nack (e.g., 2 bits) from a terminal 61 are supplied to the switching part 13. The selecting part 62 selects a reference signal of 1 in the second block of a slot. In addition, in a case of DTX, a reference signal of 1 is selected in the sixth block of a slot. In a case of Ack, a reference signal of exp[2π/3] is selected. In a case of Nack/ a reference signal of exp[4π/3] is selected. The selected reference signals are supplied to the switching part 13.

In a case of Ack, the switching part 13 sequentially selects and switches the CQI, exp[2π /3], CQI, CQI, CQI, exp[2π/3], and CQI illustrated in (A) of FIG. 15 to the multiplying part 20 in block units. Further, in a case of Nack, the CQI, exp[4π/3], CQI, CQI, CQI, exp[4π/3], and CQI illustrated in (B) of FIG. 15 are sequentially selected and switched and supplied to the multiplying part 20 in block units.

The ZC sequence part 18 generates, for example, a ZC sequence of 12 symbols. The ZC sequence is converted into parallel form by the S/P part 19 and supplied to the multiplying part 20. The multiplying part 20 multiplies the ZC sequence with the signals supplied from the switching part 13 and supplies it to the sub-carrier mapping part 21 in parallel.

The sub-carrier mapping part 21 maps the signals from the multiplying part 20 to a frequency bandwidth of a sub-carrier of the control channel illustrated in FIG. 5. Then, because the signals have been processed as signals of a frequency domain until this stage, the signals are converted into signals of time domain by performing inverse Fourier transformation in an IFFT (Inverse Fast Fourier Transform) part 22, are added with CP (Cyclic Prefix) in the CP adding part 23, and are transmitted from the transmitter 24.

FIG. 17 illustrates a block diagram of an uplink control channel receiving part of a base station according to the third embodiment of the present invention. In FIG. 17, signals received at the receiver 31 are supplied to the CP removing part 32 by which a CP is removed therefrom. Then, the signals are converted into frequency domain signals in block units by the FFT (Fast Fourier Transform) part 33.

Then, the sub-carrier de-mapping part 34 performs a sub-carrier de-mapping process and separates control data (CQI) and reference signals according to the formats illustrated in (A), (B), and (C) of FIG. 15.

The ZC sequence cancelling part 36 removes the ZC sequence from the control data by multiplying the control data with a complex conjugate sequence. Then, the frequency averaging part 37 obtains the average on the frequency axis from the control data and supplies the average to the phase compensating part 38.

The ZC cancelling part 41 removes the ZC sequence from the reference signals by multiplying the reference signals with a complex conjugate sequence. Then, the frequency averaging part 42 obtains the average on the frequency axis and supplies the average to the format determining part 63 and the slot averaging part 44.

The format determining part 63 obtains correlation values of the averaged reference signal for a pattern {1, 1}, for a pattern {1, exp[2π/3]}, and for a pattern {exp[4π/3]} and determines that the one having greatest correlation value is the pattern of the actually transmitted reference signal, that is, the transmitted format. In other words, the format determining part 43 determines whether the transmitted format is a format including Ack + CQI as illustrated in (A) of FIG. 15, a format including Nack + CQI as illustrated in (B) of FIG. 15, or a format including DTX + CQI depending on whether the reference signals in a slot have the same phase or the opposite phase. The format determining part 63 supplies the determination result to the slot averaging part 44 along with outputting it to the outside.

Based on the result of the format determination, the slot averaging part 44 averages the reference signals according to the result of the format determination after making the phase of the reference signals in a slot the same (e.g., phase of 0) and supplies the reference signals to the phase compensating part 38. The phase compensating part 38 performs phase compensation of the control data according to phase data of the reference signals. Then, regardless of the type of format illustrated in (A), (B), or (C) of FIG. 15, the channel decoding part 54 decodes and outputs the channel of the CQI of the control data.

Although the above-described embodiment describes the reference signals having three patterns {1, 1}, {1, exp(2π/3)}, and {1, exp(4π /3)}, the reference signals may have four patterns {1, 1}, {1, exp(π/4)}, {1, exp(π/2)}, and {1, exp(3π/4)}.

<Fourth Embodiment>

FIG. 18 illustrates an uplink control channel format according to a fourth embodiment of the present invention. Here, reference signals are allocated to the second and sixth block of each slot. Control data having an encoded combination of Ack and CQI, an encoded combination of Nack and CQI, or an encoded combination of DTX and CQI are allocated to the first, third through fifth, and seventh block of each slot. It is to be noted that the control data represent simultaneous encoding of Ack/Nack/DTX + CQI. Further, DTX represents data indicating whether Ack/Nack is multiplexed.

Accordingly, a base station can first determine which format is used for transmission by decoding the first, third through fifth, and seventh blocks of the received reference signals in the same slot. Based on the result of the determination, Ack/Nack and DTX can be demodulated. As a result, significant degrading of throughput due to erroneously determining DTX as Ack/Nack can be prevented.

FIG. 19 illustrates a block diagram of an uplink control channel transmission part of a user equipment according to the fourth embodiment of the present invention. In FIG. 19, for example, Ack/Nack/DTX of 2 bits and CQI of 4 or 5 bits which total 6 or 7 bits (Ack/Nack/DTX + CQI) are encoded by an encoding part 71, modulated by a modulating part 72, and supplied to the switching part 13. Further, reference signals of +1 are supplied from the terminal 16 to the switching part 13.

The switching part 13 sequentially selects and switches the Ack/Nack/DTX + CQI, +1, Ack/Nack/DTX + CQI, Ack/Nack/DTX + CQI, Ack/Nack/DTX + CQI, +1, and Ack/Nack/DTX + CQI illustrated in FIG. 18 in block units.

The ZC sequence part 18 generates, for example, a ZC sequence of 12 symbols. The ZC sequence is converted into parallel form by the S/P part 19 and supplied to the multiplying part 20. The multiplying part 20 multiplies the ZC sequence with the signals supplied from the switching part 13 and supplies it to the sub-carrier mapping part 21 in parallel.

The sub-carrier mapping part 21 maps the signals from the multiplying part 20 to a frequency bandwidth of a sub-carrier of the control channel illustrated in FIG. 5. Then, because the signals have been processed as signals of a frequency domain until this stage, the signals are converted into signals of time domain by performing inverse Fourier transformation in an IFFT (Inverse Fast Fourier Transform) part 22, are added with CP (Cyclic Prefix) in the CP adding part 23, and are transmitted from the transmitter 24.

FIG. 20 illustrates a block diagram of an uplink control channel receiving part of a base station according to the fourth embodiment of the present invention. In FIG. 20, signals received at the receiver 31 are supplied to the CP removing part 32 by which a CP is removed therefrom. Then, the signals are converted into frequency domain signals in block units by the FFT (Fast Fourier Transform) part 33.

Then, the sub-carrier de-mapping part 34 performs a sub-carrier de-mapping process and separates control data (Ack/Nack/DTX+CQI) and reference signals according to the format illustrated in FIG. 18.

The ZC sequence cancelling part 36 removes the ZC sequence from the control data by multiplying the control data with a complex conjugate sequence. Then, the frequency averaging part 37 obtains the average on the frequency axis from the control data and supplies the average to the phase compensating part 38.

The ZC cancelling part 41 removes the ZC sequence from the reference signals by multiplying the reference signals with a complex conjugate sequence. Then, the frequency averaging part 42 obtains the average on the frequency axis and supplies the average to the slot averaging part 44.

The slot averaging part 44 averages the reference signals in a slot with the same phase and supplies the reference signals to the phase compensating part 38. The phase compensating part 38 performs phase compensation of the control data according to phase data of the reference signals. Then, a channel decoding part 73 decodes and outputs the channel of the control data (Ack/Nack/DTX + CQI).

In a case where CQI is 5 bits (32 patterns), encoding of a total of 96 patterns is performed since each of Ack + CQI, Nack + CQI, DTX + CQI would have 32 patterns. Thus, encoding is performed in 96 patterns (7 bits) with 20 bits (in a case of QPSK) per sub-frame (5 blocks).

Accordingly, in a case of combining with Ack/Nack, the patterns of CQI can be reduced to sixteen by reducing accuracy by 1 bit. In this case, because Ack + CQI has 16 patterns, Nack + CQI has 16 patterns, and DTX + CQI has 32 patterns, encoding can be performed in 64 patterns. Because encoding is performed in 64 patterns with 20 bits (in a case of QPSK) per sub-frame (5 blocks), the degrading of received quality of CQI can be prevented. This can be achieved by changing the configuration of the encoding part 71 and the channel decoding part 73.

In the above-described embodiments, the encoding part 11, 14, the modulating part 12, 15, and the switching part 13 are used as a multiplexing part; the switching part 13 is used as a pattern changing part; the format determining part 43 is used as a format detecting part; the SW part 35, 45 and the channel decoding part 46, 47 are used as a separating part; the encoding part 71 and the modulating part 72 are used as an encoding part; the switching part 13 is used as an encoded data multiplexing part; the switching part 35 is used as an encoded data separating part; and the channel decoding part 73 is used as a decoding part.

## Claims

1. A control data communication method for multiplexing and transmitting a plurality of mutually independent types of control data by using a control channel and for separating the control data received from the control channel, the control data communication method **characterized by** comprising:

   changing and transmitting patterns of reference signals included in the control channel according to a format for multiplexing the control data;
   detecting the format for multiplexing the transmitted control data according to the pattern of the reference signals included in the control channel; and

separating the control data in correspondence with the detected format.

2. The control data communication method as claimed in claim 1, **characterized in that** the changing of the patterns of reference signals is based on a phase of a plurality of the reference signals included in each of the slots of the control channel.

3. The control data communication method as claimed in claim 2, **characterized in that** the phase of the plural reference signals included in each of the slots is plural.

4. The control data communication method as claimed in claim 1, **characterized in that** multiplexed plural types of control data are allocated to a same slot of the control channel.

5. The control data communication method as claimed in claim 1, **characterized in that** multiplexed plural types of control data are allocated to different slots of the control channel.

6. The control data communication method as claimed in claim 1, **characterized in that** the plural types of control data to be multiplexed are combined and encoded, and the plural types of control data are obtained by decoding and separating encoded data received from the control channel.

7. A control data communication method for multiplexing and transmitting a plurality of mutually independent types of control data by using a control channel and for separating the control data received from the control channel, the control data communication method **characterized by** comprising:

    combining and encoding the plural types of control data and multiplex indication data of a given control data; and obtaining the plural types of control data and the multiplex indication data of the given control data by separating and decoding encoded data received from the control channel.

8. The control data communication method as claimed in claim 1 or claim 7, **characterized in that** at least a single accuracy of control data to be multiplexed is reduced in correspondence with an increase in the types of control data to be multiplexed.

9. A transmitting apparatus included in a control data communication system for multiplexing and transmitting a plurality of mutually independent types of control data by using a control channel and for separating the control data received from the control channel, the transmitting apparatus **characterized by** comprising:

    a multiplexing part configured to multiplex the plural mutually independent types of control data; and a pattern changing part configured to change a pattern of reference signals included in the control channel according to a format for multiplexing the control data.

10. A receiving apparatus included in a control data communication system for multiplexing and transmitting a plurality of mutually independent types of control data by using a control channel and for separating the control data received from the control channel, the receiving apparatus **characterized by** comprising:

    a format detecting part configured to detect a format of transmitted multiplexed control data according to a pattern of received reference signals included in the control channel; and a separating part configured to separate the control data according to the control channel.

11. The transmitting apparatus as claimed in claim 9, **characterized in that** the pattern changing part is configured to change the pattern of the reference signals by making a phase of the plural reference signals included in each of the slots of the control channel.

12. The receiving apparatus as claimed in claim 10, **characterized in that** the format detecting part is configured to detect the format for multiplexing the transmitted control data according to a phase of the plural reference signals included in each of the slots of the control channel.

13. The transmitting apparatus as claimed in claim 12, **characterized in that** the pattern changing part makes the phase of the plural reference signals included in each of the slots plural.

**14.** The transmitting apparatus as claimed in claim 9, **characterized in that** the multiplexing part is configured to reduce at least a single accuracy of control data to be multiplexed in correspondence with an increase in the types of control data to be multiplexed.

**15.** The transmitting apparatus as claimed in claim 9, **characterized in that** the multiplexing part is configured to allocate the multiplexed plural types of control data to a same slot of the control channel.

**16.** The transmitting apparatus as claimed in claim 10, **characterized in that** the multiplexing part is configured to allocate the multiplexed plural types of control data to different slots of the control channel.

**17.** The transmitting apparatus as claimed in claim 9, **characterized in that** the multiplexing part is configured to combine and encode the plural types of control data to be multiplexed.

**18.** The receiving apparatus as claimed in claim 10 **characterized in that** the separating part is configured to obtain the plural types of control data by decoding and separating encoded data received from the control channel.

**19.** A transmitting apparatus included in a control data communication system for multiplexing and transmitting a plurality of mutually independent types of control data by using a control channel and for separating the control data received from the control channel, the transmitting apparatus **characterized by** comprising:

an encoding part configured to combine and encode the plural types of control data and multiplex indication data of a given control data; and
an encoded data multiplexing part configured to multiplex the encoded data obtained from the encoding part.

**20.** A receiving apparatus included in a control data communication system for multiplexing and transmitting a plurality of mutually independent types of control data by using a control channel and for separating the control data received from the control channel, the receiving apparatus **characterized by** comprising:

an encoded data separating part configured to separate combined and encoded data of the plural types of control data and multiplex indication data of a given control data received from the control channel; and
a decoding part configured to obtain the plural types of control data and multiplex indication data of the given control data by decoding the encoded data obtained from the encoded data separating part.

# FIG.1

# FIG.2

# FIG.3

subframe

1 slot | 1 slot

(A) Ack + CQI

| CQI | RS +1 | CQI | CQI | CQI | RS +1 | CQI | CQI | RS +1 | CQI | CQI | CQI | RS +1 | CQI |

(B) Nack + CQI

| CQI | RS +1 | CQI | CQI | CQI | RS −1 | CQI | CQI | RS +1 | CQI | CQI | CQI | RS −1 | CQI |

EP 2 187 546 A1

# FIG.4

FIG.5

# FIG.6

subframe

1 slot ✕ 1 slot

(A) CQI

| CQI | RS +1 | CQI | CQI | CQI | RS +1 | CQI | CQI | RS +1 | CQI | CQI | CQI | RS +1 | CQI |

(B) Ack/Nack + CQI

| CQI | RS +1 | ACK/ NACK | CQI | ACK/ NACK | RS −1 | CQI | CQI | RS +1 | ACK/ NACK | CQI | ACK/ NACK | RS −1 | CQI |

# FIG.7

EP 2 187 546 A1

# FIG.8

31 RECEIVER

32 CP REMOVING PART

33 FFT PART

34 SUB-CARRIER DE-MAPPING PART

35 SW PART

CONTROL DATA

36 ZC SEQUENCE CANCELLING PART

37 FREQUENCY AVERAGING PART

38 PHASE COMPEN-SATING PART

REFERENCE SIGNAL

41 ZC SEQUENCE CANCELLING PART

42 FREQUENCY AVERAGING PART

43 FORMAT DETER-MINING PART

44 SLOT AVER-AGING PART

45 SW PART

46 CHANNEL DECODING PART → Ack/Nack

47 CHANNEL DECODING PART → CQI

→ DTX

# FIG.9

EP 2 187 546 A1

FIG.10

EP 2 187 546 A1

```
31          32          33        34        35

RECEIVER → CP        →  FFT  →  SUB-   →  SW
            REMOVING    PART    CARRIER    PART
            PART                DE-
                                MAPPING
                                PART
```

CONTROL DATA

```
        36              37          38            45          46
      ZC         →  FREQUENCY  →  PHASE     →  SW    →  CHANNEL  → Ack
      SEQUENCE      AVERAGING     COMPEN-      PART     DECODING   /Nack
      CANCELLING    PART          -SATING               PART
      PART                        PART
```

REFERENCE SIGNAL

```
        41              42          44                        47
      ZC         →  FREQUENCY  →  SLOT                     CHANNEL  → CQI
      SEQUENCE      AVERAGING     AVER-                    DECODING
      CANCELLING    PART          AGING                    PART
      PART                        PART
```

# FIG.11

←——————————————————— subframe ——————————————————→

←——————————— 1 slot ———————————→✕←——————————— 1 slot ———————————→

(A) CQI

| CQI | RS +1 | CQI | CQI | CQI | RS +1 | CQI | CQI | RS +1 | CQI | CQI | CQI | RS +1 | CQI |
|-----|-------|-----|-----|-----|-------|-----|-----|-------|-----|-----|-----|-------|-----|

(B) Ack/Nack + CQI

| CQI | RS +1 | CQI | CQI | CQI | RS −1 | CQI | ACK/ NACK | RS +1 | ACK/ NACK | ACK/ NACK | ACK/ NACK | RS −1 | ACK/ NACK |
|-----|-------|-----|-----|-----|-------|-----|-----------|-------|-----------|-----------|-----------|------|-----------|

# FIG.12

(A) CQI

| CQI | RS +1 | CQI | CQI | CQI | RS +1 | CQI | | CQI | RS +1 | CQI | CQI | CQI | RS +1 | CQI |

1 slot — subframe — 1 slot

(B) Ack/Nack + CQI

| | RS +1 | | | RS -1 | | | | RS +1 | | | | RS -1 | |

SIMULTANEOUS ENCODING OF Ack/Nack + CQI

# FIG.13

EP 2 187 546 A1

# FIG.14

EP 2 187 546 A1

# FIG.15

subframe

1 slot ⟷ 1 slot

(A) Ack + CQI

| CQI | RS 0 | CQI | CQI | CQI | RS 2π/3 | CQI | CQI | RS 0 | CQI | CQI | CQI | RS 2π/3 | CQI |

(B) Nack + CQI

| CQI | RS 0 | CQI | CQI | CQI | RS 4π/3 | CQI | CQI | RS 0 | CQI | CQI | CQI | RS 4π/3 | CQI |

(C) DTX + CQI

| CQI | RS 0 | CQI | CQI | CQI | RS 0 | CQI | CQI | RS 0 | CQI | CQI | CQI | RS 0 | CQI |

# FIG.16

EP 2 187 546 A1

# FIG.17

EP 2 187 546 A1

FIG.18

SIMULTANEOUS ENCODING OF Ack/Nack/DTX + CQI

# FIG.19

EP 2 187 546 A1

# FIG.20

RECEIVER **31** → CP REMOVING PART **32** → FFT PART **33** → SUB-CARRIER DE-MAPPING PART **34** → SW PART **35**

CONTROL DATA → ZC SEQUENCE CANCELLING PART **36** → FREQUENCY AVERAGING PART **37** → PHASE COMPEN-SATING PART **38** → CHANNEL DECODING PART **73** → Ack/Nack/DTX CQI

REFERENCE SIGNAL → ZC SEQUENCE CANCELLING PART **41** → FREQUENCY AVERAGING PART **42** → SLOT AVER-AGING PART **44**

EP 2 187 546 A1

## INTERNATIONAL SEARCH REPORT

| | International application No. |
|---|---|
| | PCT/JP2007/067026 |

A.  CLASSIFICATION OF SUBJECT MATTER
*H04J11/00(2006.01)i, H04L1/16(2006.01)i*

According to International Patent Classification (IPC) or to both national classification and IPC

B.  FIELDS SEARCHED

Minimum documentation searched (classification system followed by classification symbols)
H04J11/00, H04L1/16

Documentation searched other than minimum documentation to the extent that such documents are included in the fields searched
Jitsuyo Shinan Koho          1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br><br>Y<br><br>A | Nokia Siemens Networks, Nokia, Detection and DTX Performance of CQI+ACK/NACK transmitted on PUCCH, 3GPP TSG RAN WG1 Meeting #50 R1-073653, 2007.08.24, pp.1-5 | 1,4,6,9-10, 15,17-18<br>2-3,5,11-13, 16<br>7-8,14,19-20 |
| Y | Ericsson, Uplink reference signals, 3GPP TSG-RAN WG1 #47 R1-063128, 2006.11, pp.1-5 | 2-3,11-13 |
| Y | Motorola, Uplink Transmission of CQI and Ack/Nack, 3GPP TSG RAN1 #49-bis R1-072706, 2007.06, pp.1-4 | 5,16 |
| A | Nokia Siemens Networks, Nokia, Multiplexing of ACK/NACK and CQI from the same UE, 3GPP TSG RAN WG1 Meeting #49 R1-072311, 2007.05, pp.1-5 | 1-20 |

[X] Further documents are listed in the continuation of Box C.          [ ] See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered   to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 02 November, 2007 (02.11.07) | 13 November, 2007 (13.11.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2007/067026 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | NEC Group, Detail of ACK/NACK and CQI transmission without data transmission, 3GPP TSG RAN WG1 Meeting #50 R1-073464, 2007.08.24, pp.1-3 | 1-20 |
| A | KDDI, NTT DoCoMo, CDMA based Multiplexing of ACK/NACK and CQI Control Information in E-UTRA Uplink, 3GPP TSG RAN WG1 Meeting #47 R1-063354, 2006.11, pp.1-4 | 1-20 |
| A | NTT DoCoMo, Ericsson, Fujitsu, Mitsubishi Electric, Sharp, Toshiba Corporation, CDM-based Multiplexing Method of Multiple ACK/NACK and CQI for E-UTRA Uplink, 3GPP TSG RAN WG1 Meeting #46bis R1-062742, 2006.10, pp.1-6 | 1-20 |

Form PCT/ISA/210 (continuation of second sheet) (April 2007)